Europäisches Patentamt

European Patent Office

Office européen des brevets

(11) Veröffentlichungsnummer: **0 399 086**
**A1**

## EUROPÄISCHE PATENTANMELDUNG

(21) Anmeldenummer: **89109571.3**

(22) Anmeldetag: **26.05.89**

(51) Int. Cl.5: **B29C 47/68**

(43) Veröffentlichungstag der Anmeldung:
**28.11.90 Patentblatt 90/48**

(84) Benannte Vertragsstaaten:
**BE DE ES FR GB IT NL**

(71) Anmelder: **Hartig, Günter**
**Lerchenweg 1**
**D-6458 Rodenbach 2(DE)**

(72) Erfinder: **Hartig, Günter**
**Lerchenweg 1**
**D-6458 Rodenbach 2(DE)**

(74) Vertreter: **Schieferdecker, Lutz, Dipl.-Ing.**
**Herrnstrasse 37**
**D-6050 Offenbach am Main(DE)**

(54) **Filtervorrichtung zum Reinigen von Kunststoffschmelzen.**

(57) Die Erfindung betrifft eine Filtervorrichtung (1) zum Reinigen von Kunststoffschmelzen in einer Extrusionsanlage mit einem Filtergehäuse (4), das einen Strömungskanal (5) mit einer Eintrittsöffnung (6) und einer Austrittsöffnung (7) für den Schmelzestrom sowie einen mindestens schwenkbar gelagerten Filterträger (8) mit mindestens einem Filterelement (9) umfaßt.

Der Kern der Erfindung liegt darin, daß im Strömungskanal (5) ein walzenförmiger, zylindrischer Filterträger (8) mit einer quer zu seiner Dreh- bzw. Schwenkachse gerichteten, das Filterelement (9) aufnehmenden Durchtrittsöffnung (10) und in Strömungsrichtung dahinter ein wahlweise einstellbares Umlenkelement (14) für mindestens zwei Abströmrichtungen des Schmelzestromes angeordnet sind.

Fig. 1

EP 0 399 086 A1

## Filtervorrichtung zum Reinigung von Kunststoffschmelzen

Die Erfindung betrifft eine Filtervorrichtung zum Reinigen von Kunststoffschmelzen in einer Extrusionsanlage mit einem Filtergehäuse, das einen Strömungskanal mit einer Eintrittsöffnung und einer Austrittsöffnung für den Schmelzestrom sowie einen mindestens schwenkbar gelagerten Filterträger mit mindestens einem Filterelement umfaßt.

Eine Filtervorrichtung der genannten Art ist z.B. aus der DE-AS 21 53 962 bekannt. Sie umfaßt plattenförmige bzw. scheibenförmige Filterelemente, die sich in den Strömungskanal schieben lassen und bei Bedarf ausgewechselt werden. Mit jedem Wechsel des Filterelementes gelangt Luft in das Innere der Filtervorrichtung, wodurch die Gefahr besteht, daß es in der Kunststoffschmelze zur Blasenbildung kommt. Um dies zu vermeiden, sind derartige Filtervorrichtung mit zum Teil aufwendigen Luftabsaugevorrichtungen versehen, die dazu führen, daß auch die Filtervorrichtung insgesamt ein kompliziertes und aufwendiges Bauteil ist.

Der Erfindung liegt die Aufgabe zugrunde, eine Filtervorrichtung für Kunststoffschmelzen zu schaffen, mit deren Hilfe es möglich ist, das Filterelement auf einfache und unkomplizierte Art und Weise zu reinigen und gegebenenfalls auszutauschen, wobei dies ohne vorherige Abschaltung und Abkühlung der Extrusionsanlage möglich ist.

Zur Lösung dieser Aufgabe sieht die Erfindung vor, daß im Strömungskanal ein walzenförmiger, zylindrischer Filterträger mit einer quer zu seiner Dreh- bzw. Schwenkachse gerichteten, das Filterelement aufnehmenden Durchtrittsöffnung und in Strömungsrichtung dahinter ein wahlweise einstellbares Umlenkelement für zwei verschiedene Strömungsrichtungen des Schmelzestromes angeordnet sind.

Zum Reinigen wird der walzenförmige Filterträger um 180° verschwenkt und dann von der Kunstoffschmelze in umgekehrter Richtung durchströmt, wobei die Kunstoffschmelze die von dem Filterelement aufgefangenen Partikel wieder herauslöst und wegtransportiert. Dieser nun stark verunreinigte Schmelzestrom wird mit Hilfe des hinter dem Filterträger angeordneten, umschaltbaren Umlenkelementes zu einem Schmelze-Ablaufkanal gelenkt und dann aufgefangen und entsorgt. Sobald das Filterelement auf diese Weise wieder frei von aufgefangenen Verunreinigungen ist, werden der Filterträger und das Umlenkelement in ihre Arbeitsstellung für den Normalbetrieb umgeschwenkt.

Das Umlenkelement ist eine Strömungsweiche, die als Klappe ausgebildet sein kann oder die Form einer Walze mit einer quer zur Schwenkachse gerichteten Durchtrittsöffnung und einer radial daneben angeordneten Ausnehmung besitzen kann.

Weitere Merkmale der Erfindung gehen aus der Beschreibung und Unteransprüchen im Zusammenhang mit der Zeichnung hervor.

Die Erfindung wird nachstehend anhand von Ausführungsbeispielen, die in der Zeichnung dargestellt sind, näher beschrieben. Dabei zeigen:

Fig. 1: einen Längsschnitt durch die Filtervorrichtung;

Fig. 2: einen gegenüber Fig. 1 um 90° gedrehten Längsschnitt durch die Filtervorrichtung;

Fig. 3: in größerem Maßstab einen Schnitt durch einen Filterträger mit einem kegelförmigen Filterelement und

Fig. 4: in größerem Maßstab einen Schnitt durch einen Filterträger mit einer jeweils vom walzenförmigen Umfang zum Inneren hin konisch divergierenden Durchtrittsöffnung.

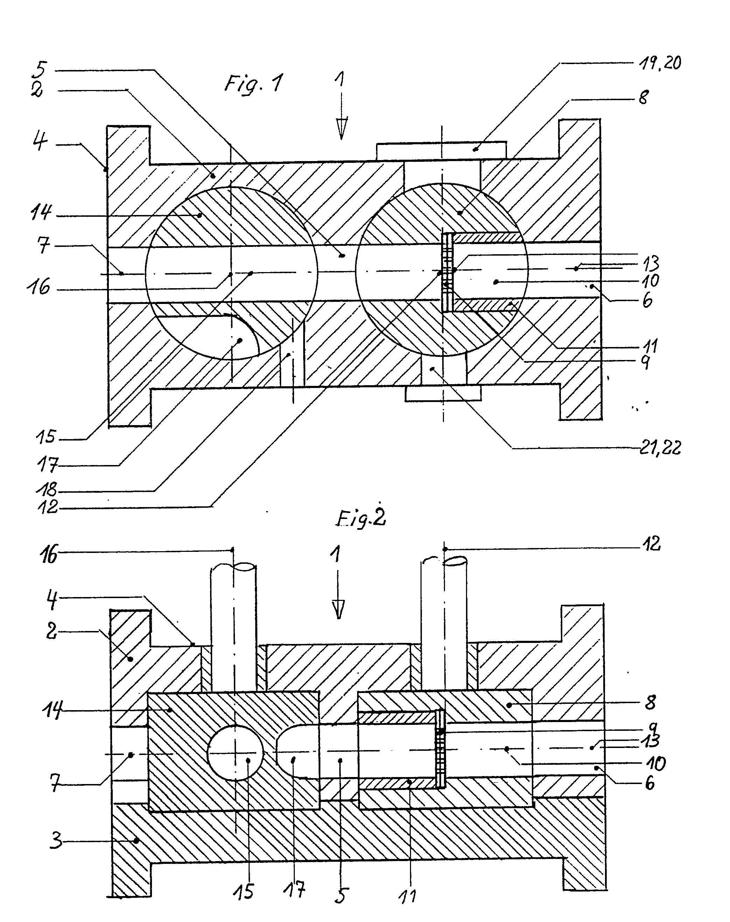

Eine Filtervorrichtung 1 zum Reinigen von Kunststoffschmelzen umfaßt ein vorzugsweise geteiltes, aus zwei Gehäusehälften 2, 3 bestehendes Filtergehäuse 4, das einen Strömungskanal 5 mit einer Eintrittsöffnung 6 und einer Austrittsöffnung 7 für den Schmelzestrom sowie einen mindestens schwenkbar gelagerten Filterträger 8 mit mindestens einem Filterelement 9 umfaßt. Das Filterelement 9 befindet sich in dem Filterträger 8 in einer abgesetzten Durchtrittsöffnung 10 und ist dort mit Hilfe eines rohrförmigen bzw. hülsenförmigen Paßstückes 11 gehalten (Fig. 1).

Der im Strömungskanal 5 angeordnete Filterträger 8 ist walzen- bzw. zylinderförmig und um seine Achse 12 schwenkbar gelagert. Die Durchtrittsöffnung 10 bzw. deren Achse 13 deckt sich im Betriebszustand mit der Achse des Strömungskanales 5 und steht rechtwinklig zur Schwenkachse 12. Der Filterträger 8 ist um mindestens 180° schwenkbar, so daß das Filterelement 9 wahlweise von beiden Seiten angeströmt werden kann, wie ein Vergleich der Figuren 1 und 2 zeigt.

In Strömungsrichtung hinter dem Filterträger 8 ist ein wahlweise einstellbares Umlenkelement 14 angeordnet und in der Lage, den Schmelzestrom in eine von zwei verschiedenen Richtungen zu lenken. Dieses Umlenkelement 14 ist ebenfalls walzenförmig und weist eine Durchtrittsöffnung 15 auf, die ebenfalls quer zu seiner Dreh- bzw. Schwenkachse 16 steht. Die Durchtrittsöffnung 15 fluchtet im Betriebszustand mit der Durchtrittsöffnung 10 im Filterträger 8 sowie mit dem Strömungskanal 5, wie aus Fig. 1 hervorgeht.

Das als Strömungsweiche dienende Umlenkelement 14 weist ferner eine radial zu der Durchtrittsöffnung 15 versetzte Ausnehmung 17 auf, die sich vom Umfang das walzenförmigen Umlenkelementes 14 in sein Inneres erstreckt und teilweise parallel zur Durchtrittsöffnung 15 angeordnet ist. In der Betriebsstellung gemäß Fig. 1 liegt die Durchtrittsöffnung 15 des Umlenkelementes 14 fluchtend im Strömungskanal 5, so daß Kunststoffschmelze von der Eintrittsöffnung 6 des Filtergehäuses 4 durch das Filterelement 9 zur Austrittsöffnung 7 strömen kann. Nach einem Verschwenken um 90° gegen den Uhrzeigersinn (Fig. 1) liegt die Ausnehmung 17 des Umlenkelementes 14 im Strömungskanal 5 und leitet die Kunststoffschmelze zu einem im Filtergehäuse 4 ebenfalls angeordneten Schmelzeablaufkanal 18. Diese Situation ist jeweils dann gegeben, wenn beim Reinigen des Filterelementes 9 hierdurch verunreinigte Kunststoffschmelze nicht mehr weiter benutzt, sondern ausgeschieden werden soll.

Zum Verschwenken des Filterträgers 8 und des Umlenkelementes 14 ist jeweils ein geeigneter, nicht dargestellter Antrieb mit Schwenkwellen entsprechend den Achsen 12 und 16 vorgesehen. Zur Montage und Demontage des walzenförmigen Filterträgers 8 und des walzenförmigen Umlenkelementes 14 ist das Filtergehäuse 4 zweigeteilt.

Zur Montage und Demontage des Filterelementes 9 während des Betriebes bzw. ohne vorherige Abkühlung der Extrusionsanlage ist im Filtergehäuse 4 um 90° versetzt zum Strömungskanal 5 eine Montageöffnung 19 vorgesehen und mit Hilfe eines Verschlußstückes 20 während des Betriebes verschließbar. Zweckmäßigerweise befinden sich eine weitere Montageöffnung 21 und ein weiteres Verschlußstück 22 im Filtergehäuse 3 diametral gegenüber der Montageöffnung 19 mit dem Verschlußstück 20 (Fig. 1).

Das Filterelement 9 bzw. ein kompletter Filtereinsatz können im wesentlichen flach und scheibenförmig sein, wie aus Figur 1 hervorgeht.

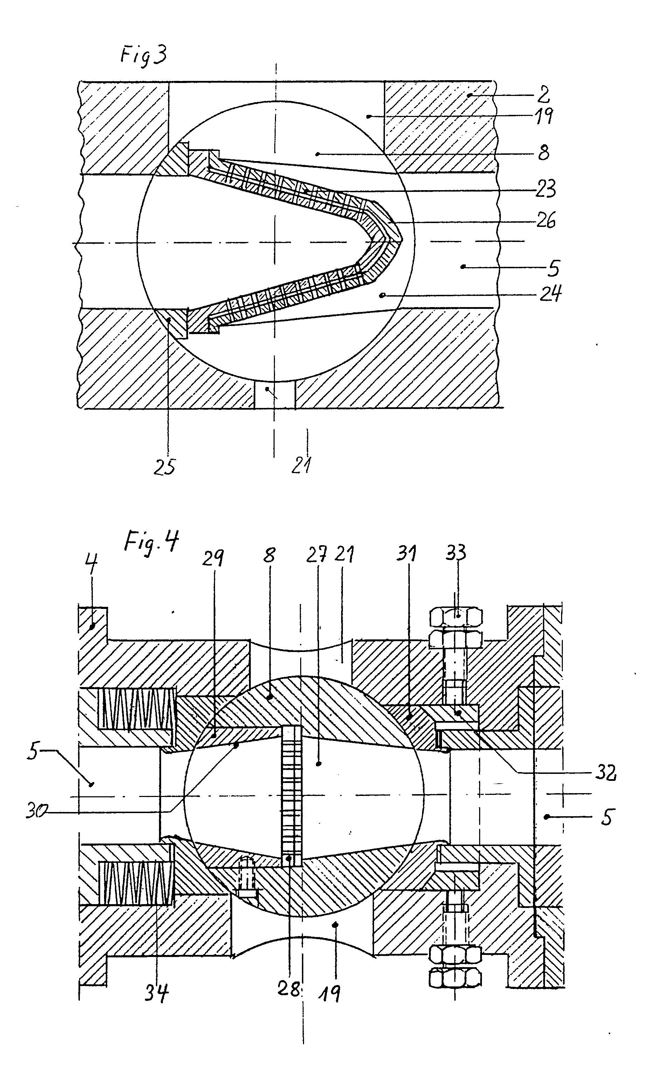

In Abwandlung der Erfindung ist aber auch die Verwendung eines annähernd kegelmantelförmigen Filterelementes 23 möglich, das in eine in Strömungsrichtung divergierende Durchtrittsöffnung 24 im Filterträger 8 eingesetzt ist und mit Hilfe eines aussen an die walzenförmige Kontur des Filterträgers 8 angepaßten Paßstückes lösbar fixiert ist. Im Betriebszustand gemäß Figur 3 ist das Filterelement 23 mit seiner konkaven Seite bzw. mit seiner Spitze 26 zur Eintrittsöffnung 6 des Filtergehäuses 4 gerichtet und bildet insgesamt eine wesentlich größere Oberfläche als ein ebenes Filterelement 9 gemäß Fig. 1.

Die Figur 4 zeigt schließlich eine weitere Abwandlung, wobei zwecks Vergrößerung der Filteroberfläche die Durchtrittsöffnung 27 einen walzenförmigen Filterträger 8 von aussen nach innen konisch divergiert, so daß das Filterelement 28 einen Querschnitt aufweisen kann, der mindestens gleich groß, vorzugsweise jedoch sogar größer als der Querschnitt des Strömungskanales 5 ist (Fig. 4).

Aus einbautechnischen Gründen wird das Filterelement 28 von einem Paßstück 29 gehalten, dessen Aussenkontur teilweise an die Walzenform des Filterträgers 8 angepaßt ist und dessen Innenkontur 30 zur Bildung der jeweils nach aussen konisch konvergierenden Durchtrittsöffnung 27 ebenfalls selbst konisch ist.

Auch bei den Ausführungsformen gemäß den Figuren 3 und 4 erfolgt eine gegebenenfalls notwendig werdende Demontage bzw. Montage des jeweiligen Filterelementes 23 bzw. 28 während des Betriebes durch die Montageöffnungen 19 und 21 wie im Falle des zuerst beschriebenen Ausführungsbeispieles.

Für alle Ausführungsformen gilt schließlich noch, daß eine gut und sichere Abdichtung des walzenförmigen Filterträgers 8 und des walzenförmigen Umlenkelementes 14 im Filtergehäuse 4 erforderlich ist. Hiezu sind gemäß Figur 4 Dichtungselemente 31 vorgesehen, die an der zylindrischen, walzenförmigen Kontur des Filterträgers 8 bzw. Umlenkelementes 14 anliegen und zusätzlich an die Kontur angepreßt werden. Hiezu dienen Keilelemente 32 und Druckschrauben 33, die eine dosierte Einstellung des Anpreßdruckes gestatten.

Alternativ können aber auch Tellerfedern 34 vorgesehen sein, welche den Strömungskanal 5 ringförmig umgreifen und die ebenfalls ringförmigen Dichtelemente 31 beaufschlagen. Durch das Keilelement 32 bzw. durch die Tellerfedern 34 wird das Dichtelement 31 an den Filterträger 8 gedrückt.

Um während des Rückspülvorganges die Druckverhältnisse im Extruder konstant halten zu können, ist es zweckmäßig, ein in der Zeichnung nicht dargestelltes Drosselelement am Ende des Schmelzablaufkanals 8 anzuordnen.

Eine weitere Ausgestaltung der Erfindung ist in der Weise möglich, das das Filterelement 9 im Filterträger 8 nicht mittig, sondern aussermittig zur Eintrittsöffnung 6 der Filtervorrichtung 4 angeordnet wird. Dadurch ist es möglich, während des Rückspülvorganges die hierfür erforderliche Zeit abzukürzen.

## Ansprüche

1) Filtervorrichtung zum Reinigen von Kunststoffschmelzen in einer Extrusionsanlage mit einem Filtergehäuse, das einen Strömungskanal mit einer Eintrittsöffnung und einer Austrittsöffnung für den Schmelzestrom sowie einen mindestens schwenkbar gelagerten Filterträger mit mindestens einem Filterelement umfaßt, dadurch gekennzeichnet, daß im Strömungskanal (5) ein walzenförmiger, zylindrischer Filterträger (8) mit einer quer zu seiner Dreh- bzw. Schwenkachse (12) gerichteten, das Filterelement (9, 23, 28) aufnehmenden Durchtrittsöffnung (10, 24, 27) und in Strömungsrichtung dahinter ein wahlweise einstellbares Umlenkelement (14) für mindestens zwei Abströmrichtungen des Schmelzestromes angeordnet sind.

2) Filtervorrichtung nach Anspruch 1, dadurch gekennzeichnet, daß das Umlenkelement (14) eine walzenförmige, umschaltbare Strömungsweiche ist und eine quer zu seiner Dre- und Schwenkachse (16) gerichtete Durchtrittsöffnung (15) und radial versetzt dazu eine Ausnehmung (17) zum wahlweisen Verbinden des Strömungskanales (5) mit seiner Auslaßöffnung (7) oder mit einem im Filtergehäuse (4) angeordneten Schmelzeablaufkanal (18) aufweist.

3) Filtervorrichtung nach einem der vorhergehenden Ansprüche, dadurch gekennzeichnet, daß das Filtergehäuse (4) geteilt ist.

4) Filtervorrichtung nach einem der vorhergehenden Ansprüche, dadurch gekennzeichnet, daß das Filtergehäuse (4) mindestens eine quer zum Strömungskanal (5) gerichtete Montageöffnung (19, 21) für das Filterelement (9, 23, 28) aufweist.

5) Filtervorrichtung nach einem der vorhergehenden Ansprüche, dadurch gekennzeichnet, daß das Filterelement (23) kegelmantelförmig ist.

6) Filtervorrichtung nach einem der vorhergehenden Ansprüche, dadurch gekennzeichnet, daß die Durchtrittsöffnung (27) im walzenförmigen Filterträger (8) von aussen nach innen konisch divergiert und das Filterelement (28) einen Querschnitt aufweist, der mindestens gleich groß, vorzugsweise jedoch größer als der Querschnitt des Strömungskanals (5) ist.

EP 0 399 086 A1

Fig. 1

Fig. 2

Fig 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 127 958 (V. NEWMAN) <br> * Ansprüche; Figuren * | 1,2 | B 29 C 47/68 |
| Y | | 3-6 | |
| Y | US-A-3 645 401 (J.S. ROBERTS) <br> * Figuren * | 3,4 | |
| Y | DE-A-2 947 673 (HERMANN BERSTORFF MASCHINENBAU GmbH) <br> * Figur 1 * | 5 | |
| Y | PATENT ABSTRACTS OF JAPAN, Band 7, Nr. 16 (M-187)[1161], 22. Januar 1983; & JP-A-57 173 144 (HOSHI KOGYO K.K.) 25-10-1982 <br> * Zusammenfassung * | 6 | |
| X | FR-A-1 550 932 (J.B. OLSEN) <br> * Figuren 1-4 * | 1 | |
| X | DE-B-1 238 198 (WELDING ENGINEERS INC.) <br> * Figur 14 * | 1 | **RECHERCHIERTE SACHGEBIETE (Int. Cl.5)** <br><br> B 29 C |
| A | DE-A-3 716 707 (H. POHL) <br> * Zusammenfassung; Figuren * | 1,4 | |
| A | DE-A-2 844 246 (HERMANN BERSTORFF MASCHINENBAU GmbH) <br> * Figuren * | 1,4 | |
| A | DE-A-2 947 698 (HERMANN BERSTORFF MASCHINENBAU GmbH) <br> * Figuren * <br> --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 16-01-1990 | BELIBEL C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

                                            
& : Mitglied der gleichen Patentfamilie, übereinstimmendes Dokument

EPO FORM 1503 03.82 (P0403)

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 033 256 (W.J. SCHRENK)<br>* Figuren *<br>--- | 1 | |
| A | DE-A-2 848 121 (J. KIPKER)<br>* Figuren *<br>----- | 1 | |

RECHERCHIERTE
SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 16-01-1990 | BELIBEL C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)